# EUROPEAN PATENT APPLICATION

(11) **EP 3 748 524 A1**
(43) Date of publication of application: **09.12.2020**
(21) Application number: 19747664.1
(22) Date of filing: 31.01.2019
(51) Int. Cl.: G06F 21/55, B60R 16/023, G06F 21/57

(54) **IN-VEHICLE DEVICE AND INCIDENT MONITORING METHOD**

(30) Priority: 02.02.2018 JP 2018017647
(71) Applicant: Clarion Co., Ltd., Saitama-shi, Saitama 330-0081 (JP)
(72) Inventor: KAWAUCHI, Takashi, Tokyo 100-8280 (JP); KAYASHIMA, Makoto, Tokyo 100-8280 (JP); SEKI, Kota, Tokyo 100-8280 (JP); NAGAI, Yasushi, Saitama-shi, Saitama 330-0081 (JP); ANDO, Eriko, Tokyo 100-8280 (JP)
(74) Representative: Mewburn Ellis LLP
(86) International application number: PCT/JP2019/003413
(87) International publication number: WO 2019/151406

(57) **Abstract**

An in-vehicle apparatus mounted in a vehicle equipped with a network configured of a plurality of pieces of equipment includes an incident detection processing unit that: acquires vehicle information indicating a control status of the vehicle; detects an incident which has occurred at the vehicle on the basis of the vehicle information: identifies equipment with vulnerability related to the detected incident within the network; and performs tentative handling with respect to the identified equipment.

## Description

### [TECHNICAL FIELD]

The present invention relates to an in-vehicle apparatus for monitoring incidents and an incident monitoring method using this in-vehicle apparatus.

### [BACKGROUND ART]

In recent years, technology regarding an in-vehicle communication system including a plurality of electronic control units (ECU), which acquires various information by communicating with external information communication equipment and implements safe driving support for, and automatic driving of, vehicles by using the acquired information, has started to become widespread. With such an in-vehicle communication system, there is an increasing risk of receiving cyberattacks from outside and there is a demand for enhancement of security performance.

Regarding the enhancement of the security performance of the in-vehicle communication system, technology described in PTL 1 is known. PTL 1 discloses an in-vehicle communication system that includes a monitoring apparatus for detecting DoS attacks Denial of Service attacks) from outside a vehicle, wherein if the monitoring apparatus judges that a DoS attack has occurred, the monitoring apparatus transmits an attack notice indicating the occurrence of the DoS attack to a gateway which relays data communications with equipment outside the vehicle and the gateway which has received this attack notice stops relaying the data communications.

### [CITATION LIST]

### [PATENT LITERATURE]

[PTL 1] Japanese Patent Application Laid-Open (Kokai) Publication No. 2016-143963

### [SUMMARY OF INVENTION]

### [TECHNICAL PROBLEM]

The in-vehicle communication system described in PTL 1 blocks all the communications with the equipment outside the vehicle once the monitoring apparatus detects the DoS attack, so that the in-vehicle communication system stops even unaffected functions, thereby resulting in a problem of impairing user-friendliness.

### [SOLUTION TO PROBLEM]

An in-vehicle apparatus according to the present invention is mounted in a vehicle equipped with a network configured of a plurality of pieces of equipment and includes an incident detection processing unit that: acquires vehicle information indicating a control status of the vehicle; detects an incident which has occurred at the vehicle on the basis of the vehicle information: identifies equipment with vulnerability related to the detected incident within the network; and performs tentative handling with respect to the identified equipment.

An incident monitoring method according to the present invention for a network configured of a plurality of pieces of equipment in a vehicle includes: acquiring vehicle information indicating a control status of the vehicle; detecting an incident which has occurred at the vehicle on the basis of the vehicle information: identifying equipment with vulnerability related to the detected incident within the network; and performing tentative handling with respect to the identified equipment.

### [ADVANTAGEOUS EFFECTS OF INVENTION]

The security performance of the network in the vehicle can be enhanced and degradation of user-friendliness can be suppressed according to the present invention.

### [BRIEF DESCRIPTION OF DRAWINGS]

[Fig. 1] Fig. 1 is a configuration diagram of a vehicle information network system according to one embodiment of the present invention.
[Fig. 2] Fig. 2 is a block diagram illustrating a hardware configuration of a vehicle and an in-vehicle monitoring apparatus.
[Fig. 3] Fig. 3 is a block diagram for illustrating a hardware configuration of a roadside device and a center server.
[Fig. 4] Fig. 4 is a block diagram for illustrating a functional configuration of the in-vehicle monitoring apparatus.
[Fig. 5] Fig. 5 is a block diagram for illustrating a functional configuration of the center server.
[Fig. 6] Fig. 6 is an explanatory diagram of incidents at a vehicle.
[Fig. 7] Fig. 7 is a flowchart of processing executed by the in-vehicle monitoring apparatus.
[Fig. 8] Fig. 8 is a flowchart of processing executed by the center server.
[Fig. 9] Fig. 9 is a sequence diagram of a vehicle information network system.
[Fig. 10] Fig. 10 is a diagram illustrating a configuration example of an attack scenario DB.
[Fig. 11] Fig. 11 is a diagram illustrating a configuration example of a countermeasure information DB.
[Fig. 12] Fig. 12 is a diagram illustrating a configuration example of detected information.
[Fig. 13] Fig. 13 is a diagram illustrating a configuration example of a vehicle management information DB.

### [DESCRIPTION OF EMBODIMENTS]

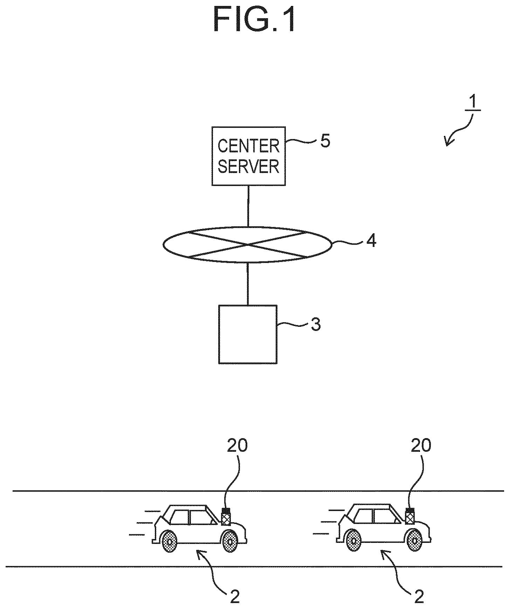

An embodiment of the present invention will be explained below with reference to the drawings. Fig. 1 is a configuration diagram of a vehicle information network system according to one embodiment of the present invention. A vehicle information network system 1 illustrated in Fig. 1 includes a plurality of vehicles 2, a roadside device 3, a network 4, and a center server 5.

Each of the plurality of vehicles 2 is equipped with an in-vehicle monitoring apparatus 20. The roadside device 3 is secured and installed at a specified point on a roadside of a road where the vehicles 2 drive. Incidentally, a plurality of roadside devices 3 may be installed at respectively different points. The roadside device 3 and the center server 5 are connected to each other via the network 4. The center server 5 performs data communications with the in-vehicle monitoring apparatus 20 via the network 4 and the roadside device 3.

Incidentally, Fig. 1 illustrates an example where two vehicles 2 are included in the vehicle information network system 1; however, the quantity of the vehicles 2 included in the vehicle information network system 1 is not limited to this example. Since the in-vehicle monitoring apparatus 20 mounted in each vehicle 2 operates in the same manner, one of the plurality of vehicles 2 is considered as a target and the operations of the in-vehicle monitoring apparatus 20 mounted in that vehicle will be mainly explained.

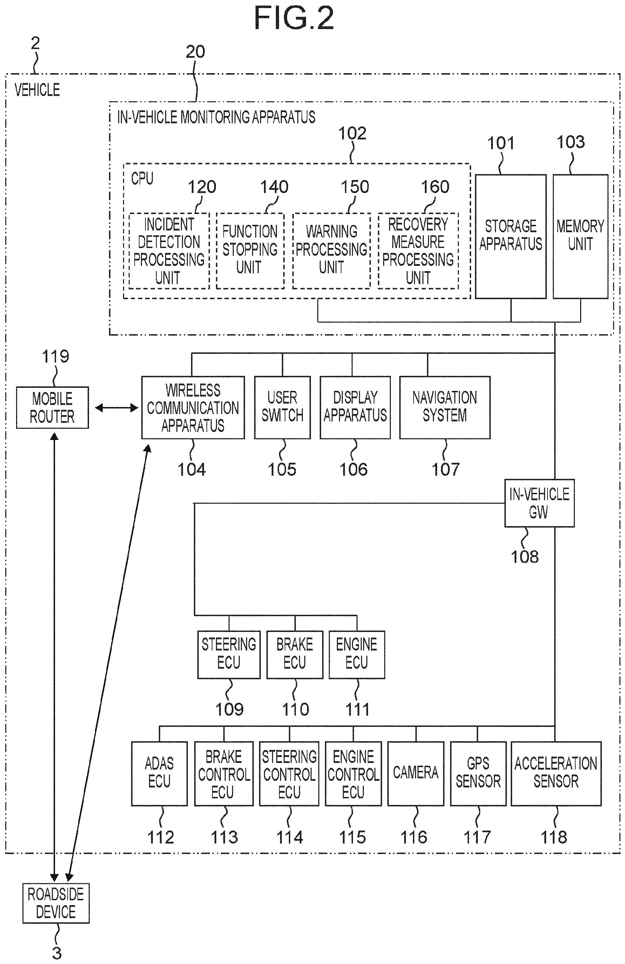

Fig. 2 is a block diagram illustrating a hardware configuration of the vehicle 2 and the in-vehicle monitoring apparatus 20. The vehicle 2 includes: the in-vehicle monitoring apparatus 20; and a wireless communication apparatus 104, a user switch 105, a display apparatus 106, a navigation system 107, an in-vehicle gateway 108, a steering ECU 109, a brake ECU 110, an engine ECU 111, an ADAS ECU 112, a brake control ECU 113, a steering control ECU 114, an engine control ECU 115, a camera 116, a GPS sensor 117, an acceleration sensor 118, and a mobile router 119 which are respectively connected to the in-vehicle monitoring apparatus 20. Incidentally, each ECU of the steering ECU 109 to the engine control ECU 115 as well as the camera 116, the GPS sensor 117, and the acceleration sensor 118 are connected to the in-vehicle monitoring apparatus 20 via the in-vehicle gateway 108. Moreover, the mobile router 119 is wirelessly connected to the in-vehicle monitoring apparatus 20 via the wireless communication apparatus 104.

The steering ECU 109, the brake ECU 110, and the engine ECU 111 are apparatuses for performing traveling control of the vehicle 2 and are connected to each other to configure a network. This network will be hereinafter referred to as a "control system network domain." The ADAS ECU 112, the brake control ECU 113, the steering control ECU 114, the engine control ECU 115, the camera 116, the GPS sensor 117, and the acceleration sensor 118 are apparatuses for performing driving support and automatic driving of the vehicle 2 and are connected to each other to configure a network. This network will be hereinafter referred to as a "driving support system network domain." The in-vehicle monitoring apparatus 20, the wireless communication apparatus 104, the user switch 105, the display apparatus 106, and the navigation system 107 are apparatuses for providing an interface with the outside of the vehicle 2 and a user interface for a driver of the vehicle 2 and are connected to each other to configure a network. This network will be hereinafter referred to as an "information system network domain." Specifically speaking, the in-vehicle monitoring apparatus 20 belongs to the information system network domain and is connected to the control system network domain and the driving support system network domain.

Regarding each of the above-described networks, the respective apparatuses within the same network can directly perform data communications without intervention of the in-vehicle gateway 108. For example, within the control system network domain, communications are performed for traveling control of the vehicle 2. Within the driving support system network domain, communications are performed for driving support and automatic driving of the vehicle 2. Within the information system network domain, communications are performed for the user interface for the driver of the vehicle 2. On the other hand, data communications between apparatuses which belong to different networks are performed via the in-vehicle gateway 108.

The wireless communication apparatus 104 is connected to the in-vehicle monitoring apparatus 20 and performs wireless communications with the roadside device 3 directly or via the mobile router 119. The in-vehicle monitoring apparatus 20 performs data communications with the roadside device 3 through wireless communications via the wireless communication apparatus 104 and the mobile router 119.

The steering ECU 109 is an apparatus for performing traveling direction control by controlling a steering mechanism for the vehicle 2 according to steering operation by the driver of the vehicle 2 or in response to a steering control command transmitted from the steering control ECU 114. The brake ECU 110 is an apparatus for performing deceleration control by controlling a brake for the vehicle according to brake operation by the driver of the vehicle 2 or in response to a brake control command transmitted from the brake control ECU 113. The engine ECU 111 is an apparatus for performing speed control by controlling an engine for the vehicle 2 according to a traveling status of the vehicle 2 or in response to an engine control command transmitted from the engine control ECU 115. The traveling control of the vehicle 2 is performed by these apparatuses.

The ADAS ECU 112 is an apparatus which judges, for example, acceleration, deceleration, and stopping of the vehicle 2 from internal and external information of the vehicle 2 and implements automatic driving of the vehicle 2 and a driving support service by using the judgment result. The ADAS ECU 112 determines behaviors of the vehicle 2 by referring to an external image(s) acquired from the camera 116, the position of the vehicle 2 which is acquired from the GPS sensor 117, a degree of acceleration of the vehicle 2 which is acquired from the acceleration sensor 118, peripheral map information of the vehicle 2 which is retained by the navigation system 107, and so on. Then, the ADAS ECU 112 issues an instruction to the brake control ECU 113, the steering control ECU 114, and the engine control ECU 115, respectively, to output a control command according to the determined behavior of the vehicle 2. Consequently, the ADAS ECU 112 automatically performs all the acceleration, steering, and braking of the vehicle 2 and implements an automatic driving function of the vehicle 2.

A user who is the driver of the vehicle 2 can make the vehicle 2 automatically travel to a destination, without performing the driving operation, by using an automatic driving function of the ADAS ECU 112. For example, when the vehicle 2 is traveling to the destination and keeps running in the same driving lane, the ADAS ECU 112 checks whether or not any obstacle exists ahead of and behind the vehicle 2 on the basis of the external image(s) acquired from the camera 116. Incidentally, a radar sensor or the like which is not illustrated in the drawing may be used in place of the camera 116. Furthermore, the ADAS ECU 112: determines a traveling direction and a traveling speed of the vehicle 2 in accordance with the shape of a driving lane on the basis of map information acquired from the navigation system 107; and transmits vehicle information including control parameters according to these values, respectively, to the brake control ECU 113, the steering control ECU 114, and the engine control ECU 115. Consequently, the vehicle 2 can be caused to automatically travel along the driving lane. Furthermore, the ADAS ECU 112: checks whether or not any obstacle exists in a lane to be changed on the basis of the external image(s) acquired from the camera 116; determines a behavior of the vehicle 2 when changing the lane; and transmits the vehicle information including the control parameters according to that value to the brake control ECU 113, the steering control ECU 114, and the engine control ECU 115, respectively. Consequently, the vehicle 2 can be caused to automatically change the lane.

The brake control ECU 113 is an apparatus for transmitting a brake control command including brake strength to the brake ECU 110 in accordance with an instruction from the ADAS ECU 112. The steering control ECU 114 is an apparatus for transmitting a steering control command including a steering operation angle to the steering ECU 109 in accordance with the instruction from the ADAS ECU 112. The engine control ECU 115 is an apparatus for transmitting an engine control command including an engine speed to the engine ECU 111 in accordance with the instruction from the ADAS ECU 112. The camera 116 is an apparatus for outputting captured images of the surroundings of the vehicle 2 to the ADAS ECU 112. The GPS sensor 117 is a positioning apparatus for measuring the position of the vehicle 2 by receiving a signal from a satellite. The acceleration sensor 118 is an apparatus for detecting the degree of acceleration in the front-back direction and right-left direction of the vehicle 2. The driving support for, and the automatic driving of, the vehicle 2 are performed by these apparatuses.

The user switch 105 is an apparatus for detecting a specified input operation by the driver of the vehicle 2. The user who is the driver of the vehicle 2 uses the user switch 105, for example, when switching the automatic driving or driving support function of the vehicle 2 from disabled to enabled or from enabled to disabled. The display apparatus 106 is, for example, a liquid crystal monitor and displays various information to the driver. For example, when the automatic driving and the driving support are implemented with the vehicle 2, the driver can comprehend the status of the vehicle 2 by displaying on the display apparatus 106 that these functions are enabled. The navigation system 107 is an apparatus which retains map information such as a road shape and provides the map information around the vehicle 2 in response to a request or the like from the user and the ADAS ECU 112. The user interface for the driver of the vehicle 2 is provided by these apparatuses.

The in-vehicle monitoring apparatus 20 includes the storage apparatus 101, the CPU 102, and the memory unit 103. The storage apparatus 101 is an auxiliary storage apparatus such as an HDD or a flash memory. The CPU 102 controls the in-vehicle monitoring apparatus 20 by reading and executing a specified control program which is stored in, for example, the storage apparatus 101.

The memory unit 103 is a main storage apparatus used by the CPU 102 when executing the control program.

The CPU 102 functionally includes an incident detection processing unit 120, a function stopping unit 140, a warning processing unit 150, and a recovery measure processing unit 160. Specifically speaking, the incident detection processing unit 120, the function stopping unit 140, the warning processing unit 150, and the recovery measure processing unit 160 are implemented in a software manner by the control program executed by the CPU 102. The incident detection processing unit 120, the function stopping unit 140, the warning processing unit 150, and the recovery measure processing unit 160 will be described later in detail.

Incidentally, each of the incident detection processing unit 120, the function stopping unit 140, the warning processing unit 150, and the recovery measure processing unit 160 can be configured by, for example, an electronic circuit like an FPGA which is capable of implementing functions equivalent to those of the CPU 102.

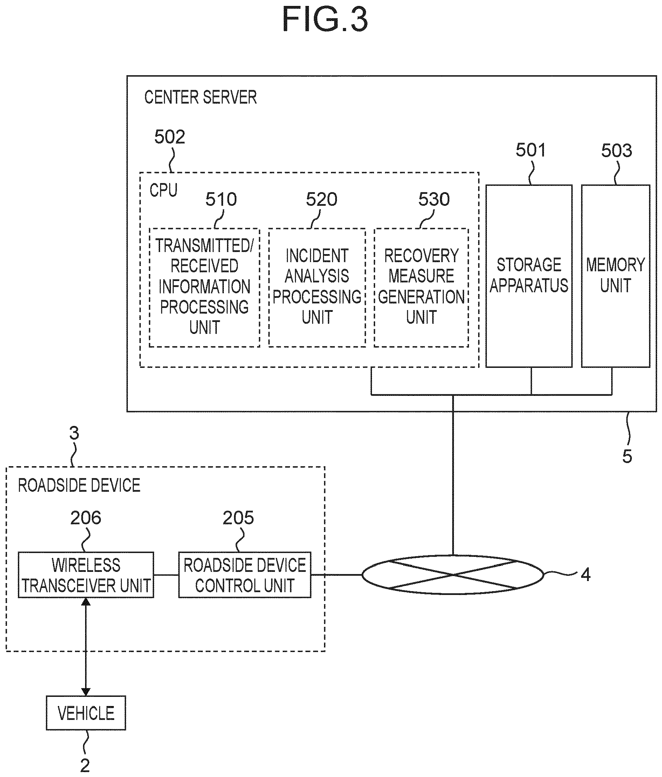

Fig. 3 is a block diagram illustrating a block diagram illustrating a hardware configuration of the roadside device 3 and the center server 5. The roadside device 3 includes a roadside device control unit 205 and a wireless transceiver unit 206.

The wireless transceiver unit 206 performs data communications with the in-vehicle monitoring apparatus 20, which is mounted in the vehicle 2, by transmitting/receiving a wireless signal. The roadside device control unit 205 controls the roadside device 3. The roadside device control unit 205 is connected to the network 4. The roadside device control unit 205 performs data communications with the center server 5 via the network 4. The roadside device control unit 205 controls the wireless transceiver unit 206 and transmits information, which has been transmitted from the center server 5, to the vehicle 2 and transmits information, which has been received from the vehicle 2, to the center server 5.

The center server 5 includes a storage apparatus 501, a CPU 502, and a memory unit 503. The storage apparatus 501 is an auxiliary storage apparatus such as an HDD or a flash memory. The CPU 502 processes information transmitted to, and received from, the roadside device 3 by reading and executing a specified control program stored in, for example, the storage apparatus 501. The memory unit 503 is a main storage apparatus used by the CPU 502 when executing the control program.

The CPU 502 functionally includes a transmitted/received information processing unit 510, an incident analysis processing unit 520, and a recovery measure generation unit 530. Specifically speaking, the transmitted/received information processing unit 510, the incident analysis processing unit 520, and the recovery measure generation unit 530 are implemented in a software manner by the control program executed by the CPU 502. The transmitted/received information processing unit 510, the incident analysis processing unit 520, and the recovery measure generation unit 530 will be described later in detail.

Next, a functional configuration of the in-vehicle monitoring apparatus 20 and the center server 5 will be explained.

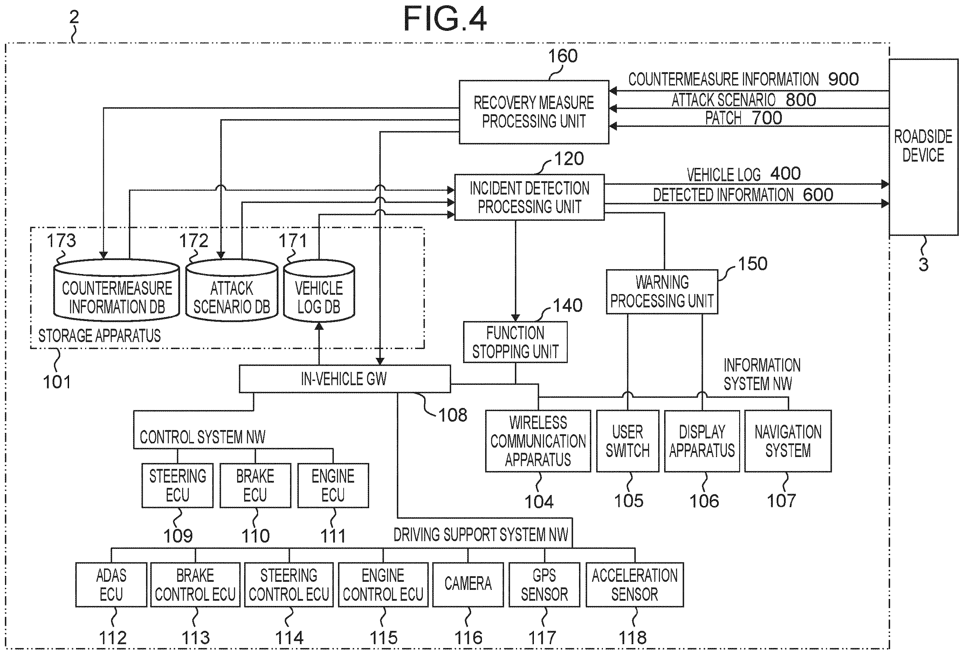

Fig. 4 is a block diagram for illustrating the functional configuration of the in-vehicle monitoring apparatus 20. The storage apparatus 101 includes a vehicle log DB 171, an attack scenario DB 172, and a countermeasure information DB 173.

The in-vehicle gateway 108 relays communications between the respective networks connected to the in-vehicle monitoring apparatus 20. For example, a brake control instruction which is transmitted from the brake control ECU 113 of the driving support system network domain to the brake ECU 110 of the control system network domain is transferred between these networks. Communications are performed via a vehicle information packet having a specified data format between apparatuses in the same network and between apparatuses of different networks. When receiving the vehicle information packet which is transmitted/received between the respective apparatuses, the in-vehicle gateway 108 adds information included in that packet, as a log of the vehicle information indicating the control status of the vehicle 2 (vehicle log), to the vehicle log DB 171. Specifically speaking, the vehicle information included in the vehicle information packet is stored in chronological order as the vehicle log in the vehicle log DB 171.

The recovery measure processing unit 160 communicates with the roadside device 3 by using the wireless communication apparatus 104 and receives a patch 700, an attack scenario 800, and countermeasure information 900, each of which indicates recovery measures against security-related incidents, from the center server 5 via the roadside device 3. Among these pieces of the information received by the recovery measure processing unit 160, the patch 700 is output to a designated transmission destination apparatus via the in-vehicle gateway 108. When a security-related incident occurs as any one of apparatuses in the control system network domain, the driving support system network domain, or the information system network domain described earlier receives a cyberattack, the patch 700 is information transmitted from the center server 5 to the relevant apparatus as a transmission destination in order to implement recovery of the apparatus which is an incident occurrence source. The patch 700 includes, for example, backdate commands and configuration files of software which operates in the relevant apparatus, and update software. Meanwhile, the attack scenario 800 and the countermeasure information 900 which are received by the recovery measure processing unit 160 are respectively added to the attack scenario DB 172 and the countermeasure information DB 173 and stored in the storage apparatus 101. Incidentally, the details of the attack scenario DB 172 and the countermeasure information DB 173 will be explained later.

The incident detection processing unit 120 regularly reads the vehicle log(s) stored in the vehicle log DB 171 and transmits the vehicle log(s) 400 to the center server 5 via the roadside device 3 by communicating with the roadside device 3 by using the wireless communication apparatus 104. Furthermore, when an incident has occurred, the incident detection processing unit 120 detects this incident on the basis of the read vehicle log(s). When detecting the occurrence of the incident, the incident detection processing unit 120 transmits the detected information 600 about the detected incident to the center server 5 via the roadside device 3. The detected information 600 includes the location where the incident was detected, a software version of the apparatus which is an information transmission source when the incident was detected, a cause of the incident, a detection date and time of the incident, and so on. Furthermore, when the occurrence of the incident is detected, the incident detection processing unit 120 identifies the apparatus having the vulnerability related to that incident from among the control system network domain, the driving support system network domain, and the information system network domain and performs tentative handling with respect to that apparatus. This tentative handling is, for example, functional degradation to stop some of functions of the apparatus and its content varies for each target apparatus.

When the function stopping unit 140 receives an instruction of the functional degradation with respect to any one of the apparatuses as the tentative handling from the incident detection processing unit 120, it stops the functions of that apparatus. When this happens, the function stopping unit 140 issues the instruction directly, without intervention of the in-vehicle gateway 108, to each apparatus in the information system network domain to which the in-vehicle monitoring apparatus 20 belongs. On the other hand, regarding each apparatus in the control system network domain and the driving support system network domain, the instruction is output to the relevant apparatus via the in-vehicle gateway 108 and the relevant apparatus is stopped. Incidentally, when stopping an inter-network information transfer function of the in-vehicle gateway 108, the instruction may be issued from the function stopping unit 140 to the in-vehicle gateway 108.

When receiving an incident occurrence notice from the incident detection processing unit 120, the warning processing unit 150 gives a warning to the user who is the driver of the vehicle 2 by using the display apparatus 106. The warning processing unit 150 gives the warning to the user to stop the functions of a specified apparatus and requests input of a confirmation operation by, for example, displaying a specified screen on the display apparatus 106. When the user performs the specified confirmation operation in response to this warning by using the user switch 105, the warning processing unit 150 notifies the incident detection processing unit 120 to that effect. After receiving this notice, the incident detection processing unit 120 issues the instruction of the functional degradation to the function stopping unit 140 and stops the functions of the relevant apparatus.

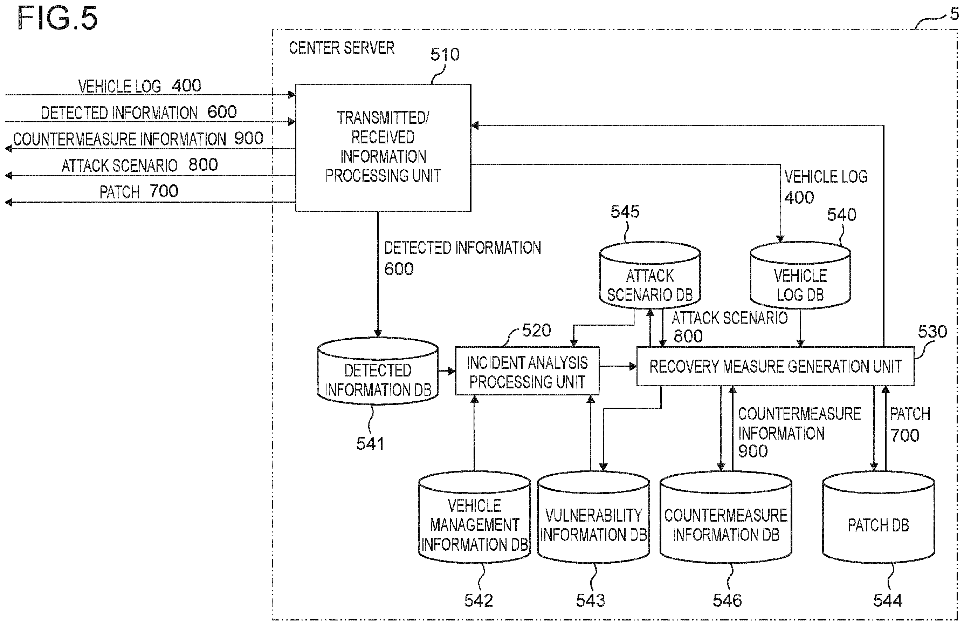

Fig. 5 is a block diagram illustrating a functional configuration of the center server 5. The storage apparatus 501 includes a vehicle log DB 540, a detected information DB 541, a vehicle management information DB 542, a vulnerability information DB 543, a patch DB 544, an attack scenario DB 545, and a countermeasure information DB 546.

The transmitted/received information processing unit 510 transmits/receives information to/from the roadside device 3. For example, the transmitted/received information processing unit 510 receives the vehicle log(s) 400 and the detected information 600, which have been transmitted from the vehicle 2, via the roadside device 3. The transmitted/received information processing unit 510 stores the vehicle log(s) 400 and the detected information 600, which have been received from the vehicle 2, in the vehicle log DB 540 and the detected information DB 541, respectively.

The incident analysis processing unit 520 analyzes the incident, which has occurred at the vehicle 2, on the basis of the detected information stored in the detected information DB 541. When this happens, the incident analysis processing unit 520 identifies an attack scenario which causes the relevant incident by referring to the attack scenario DB 545 and extracts vulnerabilities of all the apparatuses of the vehicle 2 relating to the attack scenario by referring to the vulnerability information DB 543. Then, the incident analysis processing unit 520 checks whether or not any countermeasure has been implemented with respect to all the extracted vulnerabilities at the vehicle 2, by referring to the vehicle management information DB 542. If any vulnerability exists regarding which no countermeasure has been implemented, the incident analysis processing unit 520: judges that the incident was caused by known vulnerability; and notifies the recovery measure generation unit 530 that basic handling for this should be implemented. On the other hand, if countermeasures have been implemented with respect to all the vulnerabilities, the incident analysis processing unit 520: judges that the relevant incident was caused by unknown vulnerability; and notifies the recovery measure generation unit 530 of the judgment result.

The recovery measure generation unit 530 generates a recovery measure corresponding to the incident, which has occurred at the vehicle 2, in response to the notice from the incident analysis processing unit 520. Specifically, when receiving the notice from the incident analysis processing unit 520 to implement the basic handling for the known vulnerability, the recovery measure generation unit 530 searches the patch DB 544 for the patch 700 which is not reflected at the vehicle 2 with respect to that vulnerability and outputs it to the transmitted/received information processing unit 510. Furthermore, the recovery measure generation unit 530 searches the attack scenario DB 545 and the countermeasure information DB 546 for the attack scenario 800 and the countermeasure information 900, which are not reflected at the vehicle 2, respectively and outputs them to the transmitted/received information processing unit 510. The transmitted/received information processing unit 510 transmits these pieces of information, which have been output from the recovery measure generation unit 530, to the vehicle 2 via the roadside device 3. On the other hand, when receiving the notice of the unknown vulnerability from the incident analysis processing unit 520, the recovery measure generation unit 530 outputs a signal for issuing the instruction of the functional degradation to the vehicle 2 to the transmitted/received information processing unit 510. The transmitted/received information processing unit 510 transmits the functional degradation instruction for each apparatus related to the incident, which has occurred at the vehicle 2, to the vehicle 2 via the roadside device 3 in response to the signal from the recovery measure generation unit 530. Then, the recovery measure generation unit 530 acquires the vehicle information indicating the status of the vehicle 2 before and after the occurrence of the incident from the vehicle log DB 540, examines various attack scenarios related to the unknown vulnerability on the basis of this vehicle information, and examines various information which is required to implement the basic handling. Then, the vulnerability information DB 543, the patch DB 544, the attack scenario DB 545, and the countermeasure information DB 546 are updated respectively on the basis of these examination results.

Now, the occurrence of an incident will be explained below.

A cyberattack targeted at a vehicle system generally means to cause leakage, loss, damage, falsification, and so on of information, which is recorded or transmitted/received by an electromagnetic method, by using the security vulnerabilities on various kinds of information equipment configuring the vehicle system, thereby causing operations of the information equipment, which are not intended by a designer. With the vehicle information network system 1 according to this embodiment, when the in-vehicle monitoring apparatus 20 monitors the logs of the vehicle information transmitted and received within the network of the vehicle 2 and when each equipment within the network receives a cyberattack from outside, this cyberattack is detected as an incident. Regarding incidents, for example, there are: incidents which merely check whether any vulnerability exists or not, and which cause no substantial damage; incidents by which a file(s) of the information equipment is rewritten with an unauthorized file(s); and incidents which cause remote control of the vehicle by an external unauthorized third party. In a case of a serious incident, assets and lives of the user and surrounding people may sometimes be jeopardized. Incidentally, examples of the incidents which cause no damage include: incidents by which a login name and a password are entered randomly as preparation for the unauthorized remote control using communication protocols such as FTP (File Transfer Protocol) and Telnet; incidents by which a large amount of data are transmitted to port numbers used by various kinds of protocols such as NTP (Network Time Protocol); and incidents by which whether the equipment stops or not is checked. These incidents are incidents which occur in an attack preparation stage. On the other hand, examples of the serious incidents include: incidents by which file operations such as the installation of unauthorized software are performed; and incidents of data transmission by external connection.

As a method for detecting various kinds of incidents described above, there is, for example, a detection method by analyzing histories such as login errors, accesses to suspicious port numbers, and abnormal ends of the system. There is also a method of detecting incidents by using security measure rules which are previously defined and are called a whitelist and a blacklist. Specifically, for example, incidents can be detected by detecting, for example, accesses with communication destinations other than those specified in the whitelist and file operations and installation which are targeted at files other than those specified in the whitelist, and detecting, for example, prohibited operations specified in the blacklist and communications with prohibited access destinations.

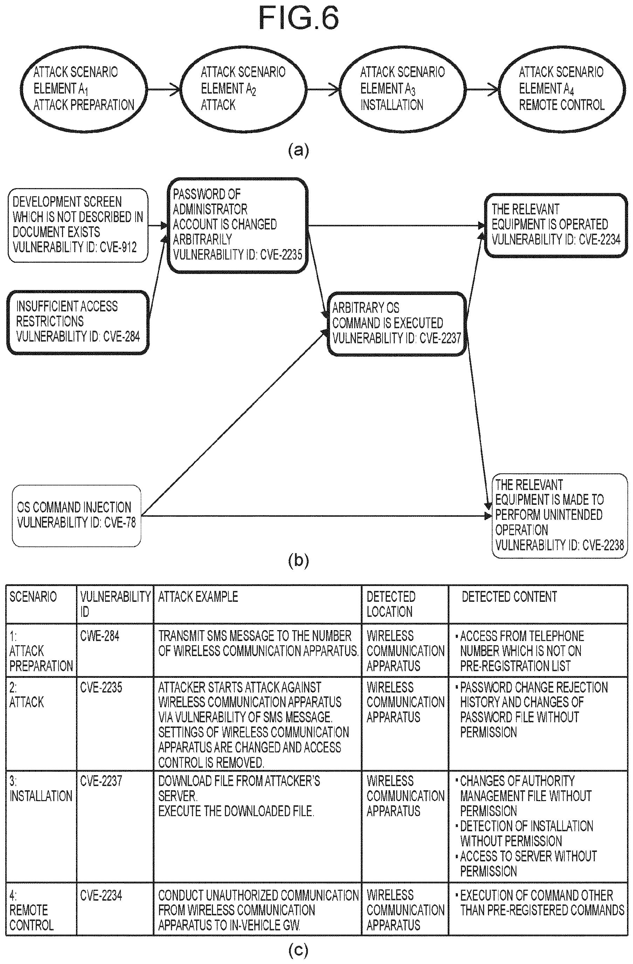

Fig. 6 is an explanatory diagram of incidents at the vehicle 2. Fig. 6 illustrates, as incident examples, incidents of unauthorized communications caused by an attack scenario using four vulnerabilities from among seven vulnerabilities existing in the wireless communication apparatus 104. Specifically, there is shown an example where: as a configuration file of the wireless communication apparatus 104 is rewritten by an SMS message received by the wireless communication apparatus 104 by using mobile communications, a software update from an unauthorized server is implemented by the wireless communication apparatus 104; and as a result, unauthorized remote control of the wireless communication apparatus 104 is performed by a malicious third party. This example shows a case where one attack scenario is divided into four stages of attack scenario elements A1 to A4 and the attack scenario is implemented by using the vulnerability in each stage. Incidentally, referring to Fig. 6, (a) indicates hierarchical stages of the attack scenario, (b) indicates the relevance between the seven vulnerabilities in the wireless communication apparatus 104, (c) indicates the details of the attack scenario.

The attack scenario element A1 corresponds to an attack preparation stage. In this stage, when the malignant third party recognizes the vulnerability by the SMS message, they sends an SMS message to random telephone numbers in order to find a vehicle having the relevant vulnerability. Under this circumstance, the in-vehicle monitoring apparatus 20 detects an incident in violation of access policies for the wireless communication apparatus 104 by detecting the reception of a call from a telephone number, which is not on a preset number list, by the wireless communication apparatus 104.

The attack scenario element A2 corresponds to an attack stage. In this stage, an attacker who has confirmed the vulnerability of the wireless communication apparatus 104 transmits an authorized program via an SMS message to the wireless communication apparatus 104 and starts an attack. When the authorized program is received, settings of the wireless communication apparatus 104 are changed and access control which is set to permit downloading of only programs from a specified program update destination server is removed. Under this circumstance, the in-vehicle monitoring apparatus 20 detects an incident in violation of security policies for the wireless communication apparatus 104 by detecting an update of a configuration file at the wireless communication apparatus 104, regarding which the access control is conducted, without permission.

The attack scenario element A3 corresponds to an installation stage. In this stage, the attacker causes the wireless communication apparatus 104 to download a file from an authorized server. Under this circumstance, the in-vehicle monitoring apparatus 20 detects an incident by detecting a change of the authority to install a program in the wireless communication apparatus 104, detecting any unauthorized installation, and detecting any access to the unauthorized server.

The attack scenario element A4 corresponds to a remote control stage. In this stage, the attacker causes the wireless communication apparatus 104 to perform unauthorized communication towards the in-vehicle gateway 108 by causing the wireless communication apparatus 104 to execute the file downloaded from the unauthorized server. Under this circumstance, the in-vehicle monitoring apparatus 20 detects an incident in violation of the access policies for the wireless communication apparatus 104 by detecting transmission of an unauthorized control command from the wireless communication apparatus 104 to the in-vehicle gateway 108 and detecting access at unauthorized timing.

At this point, the vulnerabilities used in the attack scenario are causally related to each other, so that in order to implement a certain attack scenario element, an attack scenario element in the previous stage needs to have been implemented. Therefore, with the vehicle information network system 1 according to this embodiment, the attack scenario DB 172 in which various attack scenarios hierarchically indicating the vulnerabilities that are related to each other are recorded is stored in the in-vehicle monitoring apparatus 20. When the incident detection processing unit 120 for the in-vehicle monitoring apparatus 20 detects an incident, it identifies vulnerability related to the incident detected based on the attack scenario DB 172 and performs the tentative handling with respect to an apparatus having that vulnerability. As a result, the tentative handling for the appropriate apparatus can be promptly implemented with respect to the incident which has occurred at the vehicle 2.

Incidentally, the above-described attack scenario is one example and other incidents according to various attack scenarios can be detected by the in-vehicle monitoring apparatus 20. Furthermore, the attack scenarios may be prepared for each apparatus mounted in the vehicle 2.

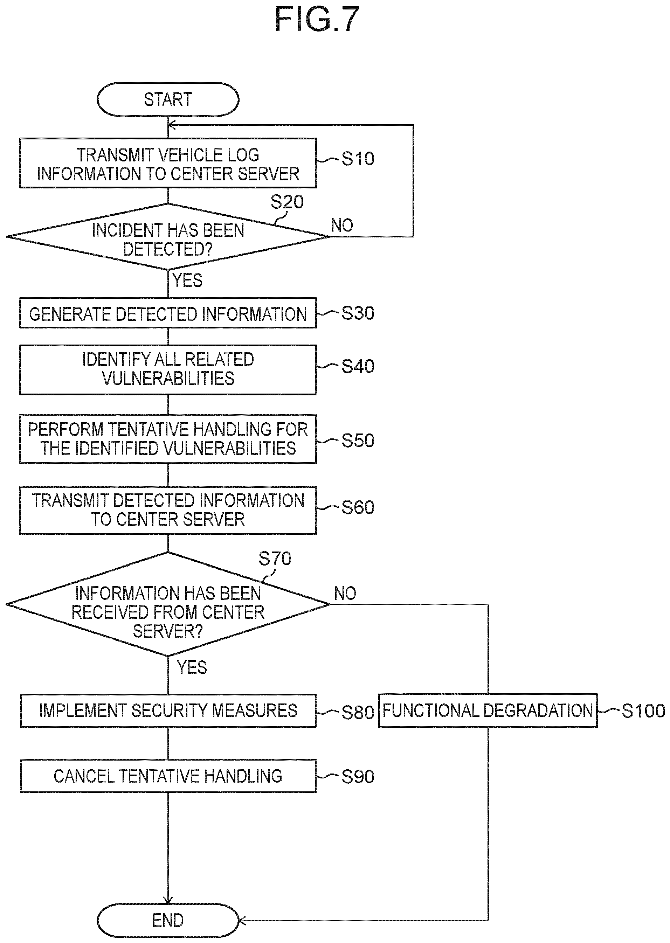

Fig. 7 is a flowchart of processing executed by the CPU 102 for the in-vehicle monitoring apparatus 20. The processing illustrated in this flowchart is executed at every specified interval by the CPU 102 for the in-vehicle monitoring apparatus 20 mounted in the vehicle 2.

In step S10, the CPU 102 causes the incident detection processing unit 120 to read vehicle logs 400 accumulated in the vehicle log DB 171 and transmit them to the center server 5 by using the wireless communication apparatus 104. Under this circumstance, it is preferable that the vehicle logs 400 which have already been transmitted by the last and preceding processing be excluded and only the vehicle logs 400 which have not been transmitted be extracted and transmitted.

In step S20, the CPU 102 causes the incident detection processing unit 120 to judge whether an incident has occurred or not, based on the vehicle logs 400 read from the vehicle log DB 171 in step S10. Under this circumstance, whether an incident has occurred or not is judged by the aforementioned method by checking whether there is any violation of the previously prescribed security measure rules or any abnormality in communication data. As a result, if no incident is detected, the processing returns to step S10 and the transmission of the vehicle logs 400 is continued; and if an incident is detected, the processing proceeds to step S30.

In step S30, the CPU 102 causes the incident detection processing unit 120 to generate the detected information 600 indicating the incident detected in step S20. Under this circumstance, the detected information 600 is generated by combining the aforementioned various kinds of information about the detected incident.

In step S40, the CPU 102 causes the incident detection processing unit 120 to identify all the vulnerabilities related to the incident detected in step S20. Under this circumstance, the attack scenario DB 172 is searched for an attack scenario corresponding to the detected incident and all the vulnerabilities related to the incident are identified by referring to that attack scenario.

In step S50, the CPU 102 causes the incident detection processing unit 120 to implement the tentative handling with respect to the vulnerabilities identified in step S40. Under this circumstance, the content of the tentative handling is determined for each vulnerability by referring to the countermeasure information DB 173 and the tentative handling is implemented in accordance with the determined content. For example, the tentative handling is implemented by identifying equipment having the relevant vulnerability within the network and causing the function stopping unit 140 to stop the functions of that equipment. Under this circumstance, the warning processing unit 150 may be caused to give a warning to the user and the tentative handling may be implemented after waiting for the user to input the confirmation operation.

In step S60, the CPU 102 causes the incident detection processing unit 120 to transmit the detected information 600 generated in step S30 to the center server 5 by using the wireless communication apparatus 104.

In step S70, the CPU 102 causes the recovery measure processing unit 160 to judge, according to the detected information 600 transmitted in step S60, whether the patch 700, the attack scenario 800, or the countermeasure information 900 has been received from the center server 5 or not. As a result, if at least any one of these pieces of information has been received, the recovery measure processing unit 160: judges that the incident detected in step S20 was caused by known vulnerability; and causes the processing to proceed to step S80. On the other hand, if the instruction of the functional degradation is received from the center server 5 without receiving any of the above-mentioned information, the recovery measure processing unit 160: judges that the incident detected in step S20 was caused by unknown vulnerability; and causes the processing to proceed to step S100.

If it is judged that the incident was caused by the known vulnerability, the CPU 102 causes the recovery measure processing unit 160 to implement security measures in step S80 against the incident detected in step S20 by using the information received from the center server 5 in step S70. Under this circumstance, the security measures are implemented by transmitting the patch 700, which has been received from the center server 5, from the recovery measure processing unit 160 to the relevant apparatus and making it installed and also storing the attack scenario 800 and the countermeasure information 900, which have been received from the center server 5, in the attack scenario DB 172 and the countermeasure information DB 173, respectively.

When it is confirmed that the security measures have been implemented with respect to all the vulnerabilities in step S80, the CPU 102 causes the incident detection processing unit 120 to cancel the tentative handling, which was implemented in step S50, in step S90.

If it is judged that the incident was caused by the unknown vulnerability, the CPU 102 causes the incident detection processing unit 120 to implement the functional degradation of the vehicle 2 in step S100. Under this circumstance, the functional degradation of the vehicle 2 is implemented by, for example, continuing the tentative handling implemented in step S50 and causing the function stopping unit 140 to continuously stop the functions of the apparatus having the vulnerability. Alternatively, the functional degradation of the vehicle 2 may be implemented by executing operations which are previously set for the functional degradation of each apparatus.

When the processing in step S90 or step S100 is executed, the CPU 102 terminates the flowchart in Fig. 7.

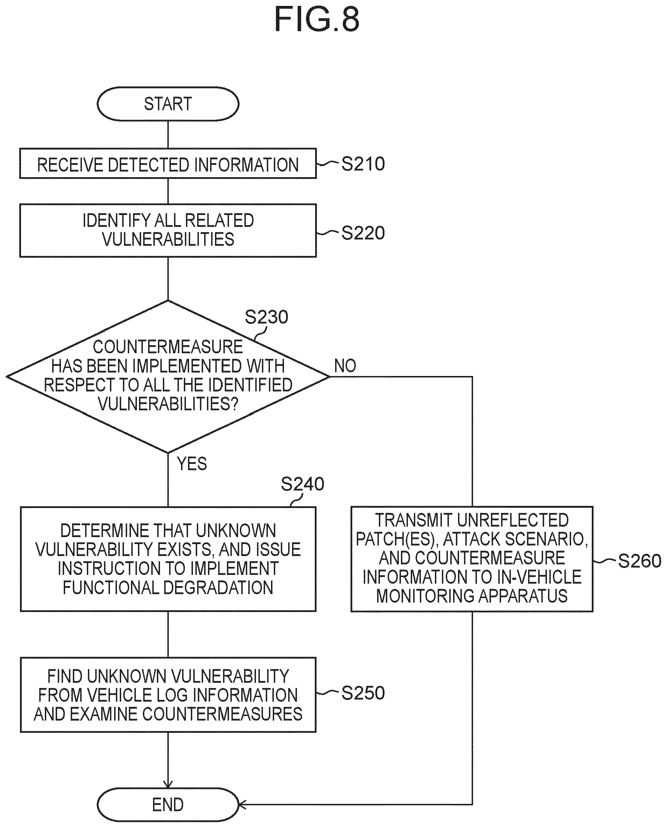

Fig. 8 is a flowchart of processing executed by the CPU 502 for the center server 5. The processing illustrated in this flowchart is executed by the CPU 502 for the center server 5 when the detected information 600 is transmitted from the in-vehicle monitoring apparatus 20.

In step S210, the CPU 502 causes the transmitted/received information processing unit 510 to receive the detected information 600 transmitted from the in-vehicle monitoring apparatus 20 and store it in the detected information DB 541.

In step S220, the CPU 502 causes the incident analysis processing unit 520 to identify all the vulnerabilities related to the incident detected by the in-vehicle monitoring apparatus 20 on the basis of the detected information 600 stored in the detected information DB 541 in step S210. Under this circumstance, all the vulnerabilities related to the incident which occurred at the vehicle 2 are identified by searching the attack scenario DB 545 for the attack scenario corresponding to the incident indicated by the detected information 600 and searching the vulnerability information DB 543 for all the vulnerabilities corresponding to the attack scenario.

In step S230, the CPU 502 causes the incident analysis processing unit 520 to judge whether or not the countermeasure has been implemented at the vehicle 2 with respect to all the vulnerabilities identified in step S220. Under this circumstance, whether or not the patch 700, the attack scenario 800, and the countermeasure information 900 have been transmitted to the in-vehicle monitoring apparatus 20 with respect to all the identified vulnerabilities is judged by referring to the vehicle management information DB 542. As a result, if the countermeasure has been implemented with respect to all the vulnerabilities, it is judged that the incident detected by the in-vehicle monitoring apparatus 20 was caused by unknown vulnerability; and the processing proceeds to step S240. On the other hand, if there is any vulnerability regarding which the countermeasure has not been implemented, it is judged that the incident detected by the in-vehicle monitoring apparatus 20 was caused by known vulnerability; and the processing proceeds to step S260.

When it is judged that the incident was caused by the unknown vulnerability, the CPU 502 causes the recovery measure generation unit 530 to issue an instruction to the in-vehicle monitoring apparatus 20 to implement the functional degradation of the vehicle 2 in step S240. The functional degradation of the vehicle 2 is implemented by the execution of the processing in step S100 in Fig. 7 by the CPU 102 for the in-vehicle monitoring apparatus 20 according to this instruction.

In step S250, the CPU 502 causes the recovery measure generation unit 530 to analyze the unknown vulnerability and examine the countermeasure against it. Then, the vulnerability information DB 543, the patch DB 544, the attack scenario DB 545, and the countermeasure information DB 546 are updated respectively based on the obtained examination result.

If it is judged that the incident was caused by the known vulnerability, the CPU 502 causes the recovery measure processing unit 160 to search the patch DB 544, the attack scenario DB 545, and the countermeasure information DB 546 for the patch 700, the attack scenario 800, and the countermeasure information 900 which have not been reflected at the vehicle 2, respectively, in step S260. Then, the recovery measure processing unit 160 transmits these pieces of information found by the search to the in-vehicle monitoring apparatus 20 by using the transmitted/received information processing unit 510. Consequently, the security measure is implemented against the incident, which occurred at the vehicle, by the execution of the processing in step S102 in Fig. 7 by the CPU 102 for the in-vehicle monitoring apparatus 20 by using the patch 700, the attack scenario 800, and the countermeasure information 900 which are transmitted from the center server 5.

After executing the processing in step S250 or step S260, the CPU 502 terminates the flowchart in Fig. 8.

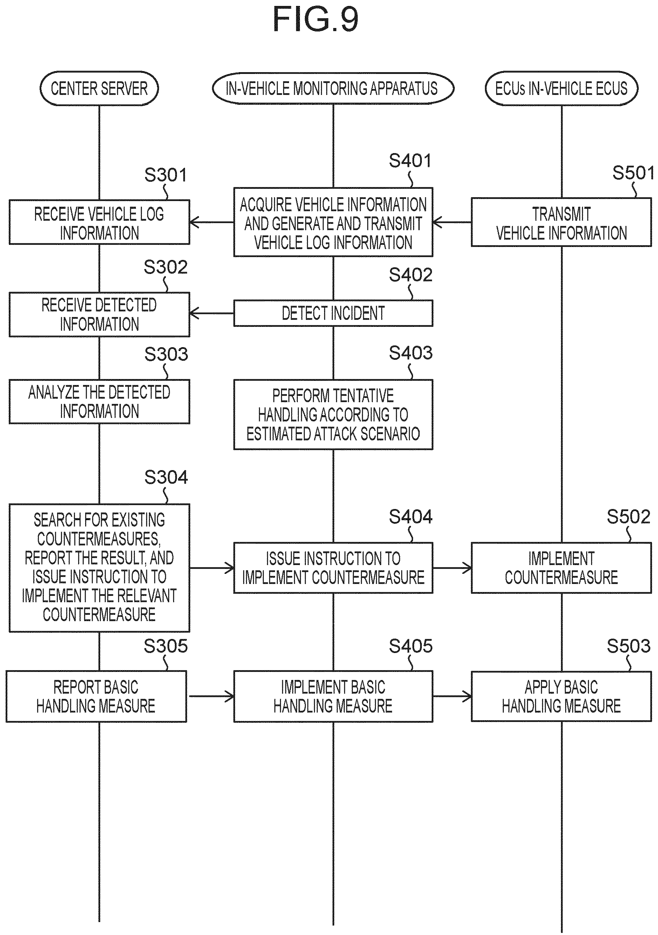

Next, the operations of the entire vehicle information network system 1 will be explained. Fig. 9 is a sequence diagram illustrating the operations of the entire vehicle information network system 1. With the vehicle information network system 1, the center server 5, the in-vehicle monitoring apparatus 20, and each apparatus in the network respectively execute processing illustrated in Fig. 9.

In step S301, the center server 5 receives the vehicle logs 400 transmitted from the in-vehicle monitoring apparatus 20 via the roadside device 3 and saves them in the vehicle log DB 540.

In step S302, the center server 5 receives the detected information 600 transmitted from the in-vehicle monitoring apparatus 20 via the roadside device 3 and saves it in the detected information DB 541.

In step S303, the center server 5 causes the incident analysis processing unit 520 to analyze the detected information 600 received in step S302.

In step S304, the center server 5 causes the recovery measure generation unit 530 to search the patch DB 544, the attack scenario DB 545, and the countermeasure information DB 546, respectively, for existing countermeasures on the basis of the analysis result of the detected information in step S303 and judge whether the occurred incident is known or not. Then, the center server 5 notifies the in-vehicle monitoring apparatus 20 of this judgment result and issues an instruction to implement any one of the tentative handling, the functional degradation, and the basic handling as a countermeasure against the incident which occurred at the vehicle 2.

In step S305, when the center server 5 has caused the recovery measure generation unit 530 to successfully plan the basic handling for the incident which occurred at the vehicle 2, it notifies the in-vehicle monitoring apparatus 20 of this basic handling and makes it possible to implement the basic handling at the vehicle 2 which is in a state of the functional degradation or the tentative handling.

In step S401, the in-vehicle monitoring apparatus 20 acquires the vehicle information transmitted from each apparatus of the network and accumulates it in the vehicle log DB 171. Furthermore, the in-vehicle monitoring apparatus 20 generates the vehicle log 400 from the vehicle log DB 171 and transmits it to the center server 5 via the roadside device 3.

In step S402, the in-vehicle monitoring apparatus 20 causes the incident detection processing unit 120 to judge whether any incident exists or not on the basis of the vehicle log DB 171. If an incident is detected, the in-vehicle monitoring apparatus 20 generates the detected information 600 and transmits it to the center server 5 via the roadside device 3.

In step S403, the in-vehicle monitoring apparatus 20 estimates an attack scenario corresponding to the incident detected in step S402 by causing the incident detection processing unit 120 to search the attack scenario DB 172 for the attack scenario to the incident detected in step S402. Then, the in-vehicle monitoring apparatus 20 implements the tentative handling according to the estimated attack scenario by referring to the countermeasure information DB 173.

In step S404, the in-vehicle monitoring apparatus 20 causes the recovery measure processing unit 160 to issue an instruction to each equipment within the network of the vehicle 2 to implement the countermeasure according to the judgment result of the incident reported by the center server 5 with respect to the detected information 600 transmitted in step S402.

In step S405, the in-vehicle monitoring apparatus 20 causes the recovery measure processing unit 160 to make each equipment within the network of the vehicle 2 implement the basic handling with respect to the incident in accordance with the notice from the center server 5.

In step S501, each equipment within the network of the vehicle 2 transmits the vehicle information to other equipment. Specifically speaking, each apparatus of the steering ECU 109, the brake ECU 110, and the engine ECU 111 in the control system network domain, each apparatus of the ADAS ECU 112, the brake control ECU 113, the steering control ECU 114, the engine control ECU 115, the camera 116, the GPS sensor 117, and the acceleration sensor 118 in the driving support system network domain, and each apparatus of the in-vehicle monitoring apparatus 20, the wireless communication apparatus 104, the user switch 105, the display apparatus 106, and the navigation system 107 in the information system network domain transmit the vehicle information to other apparatuses.

In step S502, each equipment within the network of the vehicle 2 implements the countermeasure against the incident, which occurred at the vehicle 2, in accordance with the instruction from the in-vehicle monitoring apparatus 20.

In step S503, each equipment within the network of the vehicle 2 implements the basic handling with respect to the incident, which occurred at the vehicle 2, in accordance with the instruction from the in-vehicle monitoring apparatus 20.

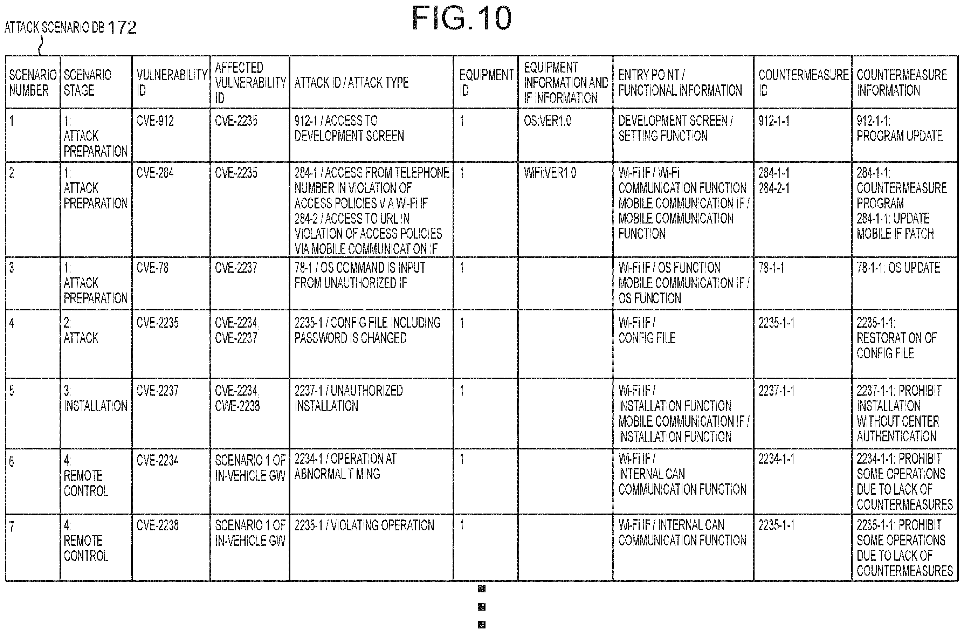

Fig. 10 is a diagram illustrating a configuration example of the attack scenario DB 172. With the attack scenario DB 172, information illustrated in Fig. 10 is set to each of attack scenario elements constituting attack scenarios. A scenario number and a scenario stage are information indicating attributes of the relevant attack scenario element. A vulnerability ID, an affected vulnerability ID, an attack ID, and an attack type are information indicating the relevance between the type of the attack and the vulnerability. An equipment ID, equipment information, IF information, an entry point, and functional information are information for uniquely identifying equipment corresponding to the vulnerability used for the attack, and a function(s) of the equipment. A countermeasure ID and countermeasure information are information indicating the content of a countermeasure against the attack.

For example, let us assume that an unauthorized access via Wi-Fi communication or mobile communication is detected as an incident corresponding to an attack scenario element with the scenario number 2 in the attack scenario DB 172 in Fig. 10. In this case, the incident detection processing unit 120 causes the function stopping unit 140 to stop a Wi-Fi communication function and a mobile communication function of the wireless communication apparatus 104 which is a Wi-Fi interface and a mobile communication interface for the vehicle 2 until countermeasures indicated with the countermeasure IDs 284-1-1 and 284-2-1 are applied, respectively. Furthermore, according to values of the affected vulnerability ID, attack scenario elements corresponding to the scenario numbers 4, 5, and 6, respectively, are identified as the attack scenario elements belonging to a series of attack scenario and the function(s) of each equipment indicated by these attack scenario elements are stopped in the same manner.

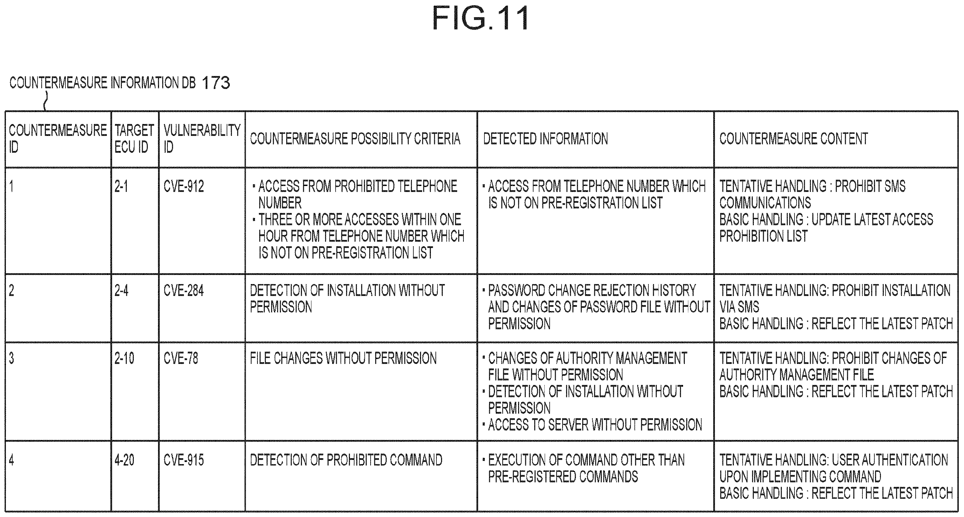

Fig. 11 is a diagram illustrating a configuration example of the countermeasure information DB 173. With the countermeasure information DB 173, information illustrated in Fig. 11 is set to each countermeasure against vulnerabilities represented by each attack scenario element of the attack scenario DB 172. A countermeasure ID, a target ECU ID, and a vulnerability ID are information indicating attributes of the countermeasure. Countermeasure possibility criteria and detected information are information indicating countermeasure application criteria. Countermeasure content is information indicating the content of the tentative handling and the basic handling as countermeasures against the vulnerabilities.

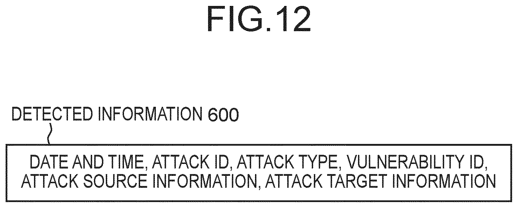

Fig. 12 is a diagram illustrating a configuration example of the detected information 600. The detected information 600 includes a date and time when the relevant incident was detected, an attack ID indicating the attribute and type of the incident, an attack type, a vulnerability ID, attack source information, and attack target information.

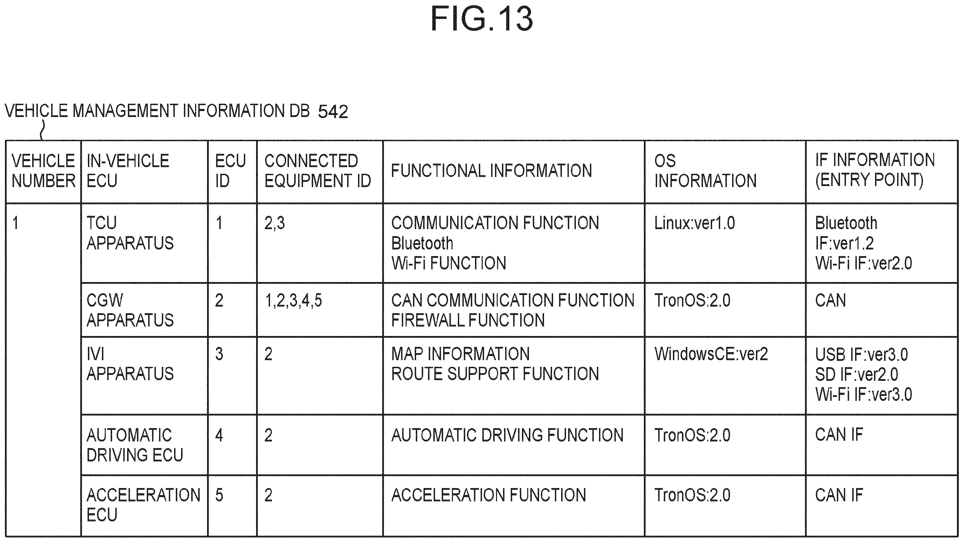

Fig. 13 is a diagram illustrating a configuration example of the vehicle management information DB 542. With the vehicle management information DB 542, information illustrated in Fig. 13 is set to each vehicle 2 which is connected to the center server 5. A vehicle number is information for uniquely identifying each vehicle 2. An in-vehicle ECU is information indicating equipment mounted in the vehicle 2. An ECU ID, a connected equipment ID, functional information, OS information, and ID information are information indicating the details of each piece of the equipment.

The following operational advantages can be achieved according to the above-explained one embodiment of the present invention.
(1) The in-vehicle monitoring apparatus 20 is mounted in the vehicle 2, which is equipped with a network configured of a plurality of pieces of equipment, and includes the incident detection processing unit 120. The incident detection processing unit 120: acquires the vehicle information indicating the control status of the vehicle 2, that is, the vehicle log(s) from the vehicle log DB 171 (Fig. 7, step S10); and detects an incident, which has occurred at the vehicle 2, on the basis of this vehicle log (step S20). Then, the incident detection processing unit 120 identifies equipment having the vulnerability related to the detected incident and performs the tentative handling with respect to the identified equipment (steps S40 and S50). Consequently, the security performance of the network in the vehicle can be enhanced and the degradation of the user-friendliness can be suppressed.
(2) The in-vehicle monitoring apparatus 20 further includes an attack scenario database in which attack scenarios hierarchically indicating vulnerabilities that are related to each other are recorded, that is, the attack scenario DB 172 having the configuration as illustrated in Fig. 10. The incident detection processing unit 120 identifies vulnerability related to the detected incident on the basis of this attack scenario database. Consequently, when an incident is detected, the vulnerability related to that incident can be identified accurately and easily.
(3) The in-vehicle monitoring apparatus 20 further includes the function stopping unit 140 which stops the functions of arbitrary equipment in the network. The incident detection processing unit 120 performs the tentative handling by causing the function stopping unit 140 to stop the functions of the identified equipment. Consequently, when an incident is detected, any adverse influence in terms of the security can be suppressed promptly within an appropriate range until the basic handling is performed.
(4) The incident detection processing unit 120 transmits the acquired vehicle log(s) 400 to the center server 5 which is wirelessly connected. Consequently, if an incident caused by unknown vulnerability occurs, the countermeasure can be examined at the center server 5.

Incidentally, the above-explained embodiment and various kinds of variations are merely examples. Unless the features of the present invention are impaired, the present invention is not limited to the aforementioned embodiment and other aspects which can be thought of within the scope of the technical idea of the present invention are also included within the scope of the present invention.

The disclosure of the following priority basic application is hereby incorporated by reference.

Japanese Patent Application No. 2018-17647 (filed on February 2, 2018)

### [REFERENCE SIGNS LIST]

- 1:: vehicle information network system
- 2:: vehicle
- 3:: roadside device
- 4:: network
- 5:: center server
- 20:: in-vehicle monitoring apparatus
- 101:: storage apparatus
- 102:: CPU
- 103:: memory unit
- 104:: wireless communication apparatus
- 105:: user switch
- 106:: display apparatus
- 107:: navigation system
- 108:: in-vehicle gateway
- 109:: steering ECU
- 110:: brake ECU
- 111:: engine ECU
- 112:: ADAS ECU
- 113:: brake control ECU
- 114:: steering control ECU
- 115:: engine ECU
- 116:: camera
- 117:: GPS sensor
- 118:: acceleration sensor
- 119:: mobile router

## Claims

1. An in-vehicle apparatus mounted in a vehicle equipped with a network configured of a plurality of pieces of equipment,
the in-vehicle apparatus comprising an incident detection processing unit that: acquires vehicle information indicating a control status of the vehicle; detects an incident which has occurred at the vehicle on the basis of the vehicle information: identifies equipment with vulnerability related to the detected incident within the network; and performs tentative handling with respect to the identified equipment.

2. The in-vehicle apparatus according to claim 1,
further comprising an attack scenario database in which an attack scenario hierarchically indicating vulnerabilities related to each other are recorded,
wherein the incident detection processing unit identifies the vulnerability related to the detected incident on the basis of the attack scenario database.

3. The in-vehicle apparatus according to claim 1 or claim 2,
further comprising a function stopping unit that stops a function which arbitrary equipment has within the network,
wherein the incident detection processing unit performs the tentative handling by causing the function stopping unit to stop the function of the identified equipment.

4. The in-vehicle apparatus according to any one of claims 1 to 3,
wherein the incident detection processing unit transmits the acquired vehicle information to a wirelessly connected center server.

5. An incident monitoring method for a network configured of a plurality of pieces of equipment in a vehicle, the method comprising:
acquiring vehicle information indicating a control status of the vehicle;
detecting an incident which has occurred at the vehicle on the basis of the vehicle information:
identifying equipment with vulnerability related to the detected incident within the network; and
performing tentative handling with respect to the identified equipment.
